# EUROPEAN PATENT SPECIFICATION

(11) **EP 0 488 446 B1**
(45) Date of publication and mention of the grant of the patent: **23.08.1995**
(21) Application number: 91203009.5
(22) Date of filing: 19.11.1991
(51) Int. Cl.: G01L 7/08, G01L 9/00, G01L 19/00

(54) **Pressure transducer with strain gauge for fitting on the end flange of a pipeline or of a casing and assembly unit implementing same**
Druckwandler mit Dehnungsmessstreifen zur Montage auf ein Rohrende mit Flansch oder einem Rohrmantel und Montageeinheit zur Aufnahme
Capteur de pression à jauge de contrainte pour adaptation sur le collet extrême d'une canalisation ou d'un tubage et ensemble de montage en faisant application

(30) Priority: 29.11.1990 FR 9015252
(43) Date of publication of application: 03.06.1992
(73) Proprietor: SOFITECH N.V., 2030 Antwerpen (BE)
(72) Inventor: Yvinec, André, F-42100 Saint Etienne (FR)
(74) Representative: Richebourg, Michel François

(56) References cited:
- EP-A- 0 138 397
- US-A- 4 527 430

## Description

The present invention relates to the technical field concerned with measuring the pressure of liquid, gaseous, or even pasty fluids, inside a containment or circulation network, such as circuits or pipelines for supplying, routing or delivering any given fluid to a storage, user or consuming installation.

By way of a preferred application, the invention relates, more particularly, to the field of pressure measurement inside the casings of drilled wells or those for the exploitation of petroleum products.

In that domain, USP 4 527 430 describes a sensor comprising a piston-spring assembly.

That document discloses a pressure transducer to be clamped onto the flange of a pipeline and having a peripheral collar defining two supporting faces the plane of which is perpendicular to the rotational axis of the transducer body.

Another class of pressure transducer uses a membrane which is sensitive to pressure. That said prior art class of sensors shall be discussed herebelow.

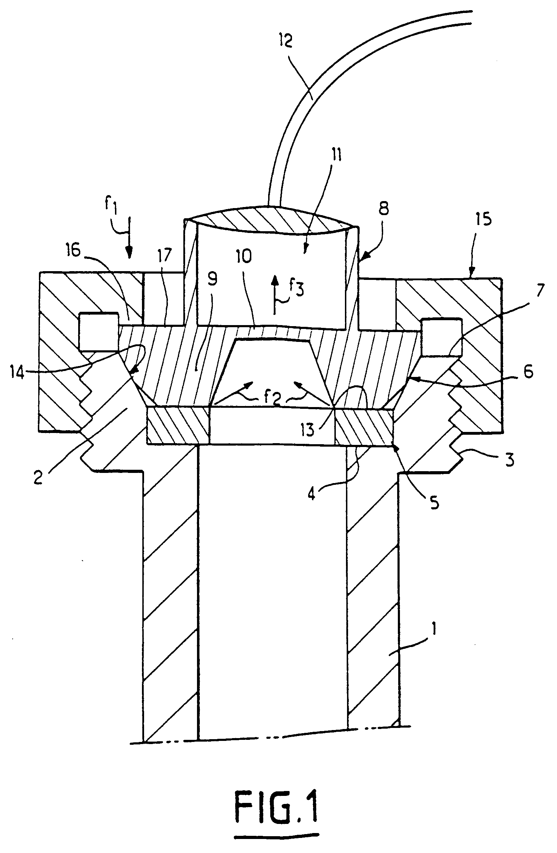

In order to measure the pressure of a given fluid occupying the casing of a well, in particular an oil well, it is costumary to use an assembly of the type illustrated in figure 1, which is a schematic representation of the prior art. Such an assembly makes use of a casing 1, the upper end of which is provided with a flange 2 externally comprising fitting means 3 which are, preferably, constituted by an external screw thread.

The casing 1 delimits, internally and substantially in the plane of the flange, a rim 4 to support a seal 5 which is of the annular type, compact and elastically deformable. Rim 4 is joined, via a frustoconical bearing face 6 to the transverse edge 7 of flange 2.

The assembly includes a pressure transducer 8, the body of which forms a base 9 which is of the annular type, closed by a membrane 10 for receiving or carrying a sensor 11 having a strain gauge connected by leads 12 to a signal processing installation. The annular base 9 comprises a plane 13 against which seal 5 bears and is compressed. Plane 13 is joined to a spherical bearing face 14 designed to cooperate for centering, or for sealing, with bearing face 6 through the action of an immobilizing or clamping member 15 acting via a rim 16 upon a supporting surface 17 of the base.

Preferably, member 15 is formed by a nut that can be screwed onto flange 2.

After installation, the tightening of member 15 takes the form, in the first place, of axial displacement of the transducer to the point of causing seal 5 to be compressed sufficiently to permit bearing faces 6 and 14 whose function it is to centre the transducer inside flange 2 to be placed in contact. The appropriate tightening effect required to obtain the above two functions can be applied either using a spanner or using a sledge-hammer, as is common practice on site.

The result of maximum tightening producing an axial pressure via rim 16 is that of placing the body of the transducer under stress by reason of the cooperation between bearing faces 6 and 14. Indeed, the axial tightening force in the direction of arrow f1 produces a radial stress in the direction of arrows f2 on annular base 9, so that membrane 10 is caused to flex in the direction of arrow f3. To this should be added a torsional stress applied to base 9 by clamping member 15.

It will be appreciated that these stresses, which cannot be assessed precisely owing to the lack of control over the conditions of tightening and the state of the surfaces in contact, make it necessary to take steps to calibrate or ensure the effective zero setting of the strain gauge deformed by the flexion of membrane 10.

In practice, the means used to attempt to calibrate or zero set the transducer do not make it possible to counter a drift in the measurements which provide results that are not reproducible in time, even when conditions of measurement are identical.

A form of hysteresis is thus usually noted in the response curve of the pressure measurements between an increasing pressure measurement phase and a decreasing pressure measurement phase. This hysteresis is chiefly due to the occurrence of sliding with friction between base 9 and frustoconical bearing face 6.

Furthermore, there is usually noted, in the course of successive measurements, a drift in the zero setting of the sensor signal whatever the calibration conditions selected.

The impossibility of controlling such data leads to erratic results which cannot be considered reliable in fields of application in which accuracy of the measurement result makes it possible to deduce the start, existence or end of an operating process, or again, the degree of tightness of a containment enclosure in which it is essential to be able to detect any possible leak.

The present invention aims to overcome the above drawbacks by providing a novel pressure transducer, having a strain gauge, specifically designed to be fitted to the end flange of a pipeline or casing, in such a way as to permit the establishment of pressure measurements that can be conducted with great accuracy, without leading to the occurrence of any substantial hysteresis factor or any zero drift.

To achieve the aforementioned objectives, the invention proposes a pressure transducer, having a strain gauge for fitting on the end flange (2) of a pipeline or of a casing (1), of the type including a cylindrical body (8) forming, perpendicular to the rotational axis (y-y′) of the body (8), an elastically deformable membrane (10) bearing a sensor (11) having a strain gauge, connected to electric leads (12), and the cylindrical body having on one side of this membrane (10) an annular base (9) having a frustoconical surface (24) which is joined to a circular centering portion (25) for cooperation with a seal (5) and on the other side of this membrane a protective envelope (21) surrounding said sensor (11),
characterized in that the cylindrical body (8) externally comprises an outwardly extending peripheral collar (22) defining two supporting faces (23.1 and 23.2) the planes of which are perpendicular to the rotational axis (y-y′) of the cylindrical body (8), one of the faces (23.1) being kept for contact with the upper section of the flange (2), while the other face (23.2) is designed to cooperate with an external clamping member (15) for clamping the cylindrical body (8) to the flange (2) by forcing the collar (22) downwardly against the said upper section of the flange (2), and in that the collar (22) is configured such that a clearance (26) between the frustoconical surface (24) of the cylindrical body (8) and the correspondingly frustoconical upper part (6) of the casing (1) / flange (2) avoids any contact other than by the collar (22).

Various other characteristics will emerge from the description that follows with reference to the annexed drawings which show, by way of non-limitative examples, forms of embodiment of the object of the invention.
Figure 1 is an elevational cross-section of a pressure transducer assembly according to prior art,
Figure 2 is an elevational cross-section illustrating a first form of embodiment of the invention,
Figure 3 is an elevational cross-section analogous to figure 2, illustrating another form of embodiment of the invention,
Figure 4 is an elevational cross-section showing, on a larger scale, a detail of embodiment according to a variant of figure 3,
Figure 5 is a partial elevational cross-section illustrating the preferred embodiment of the object of the invention.

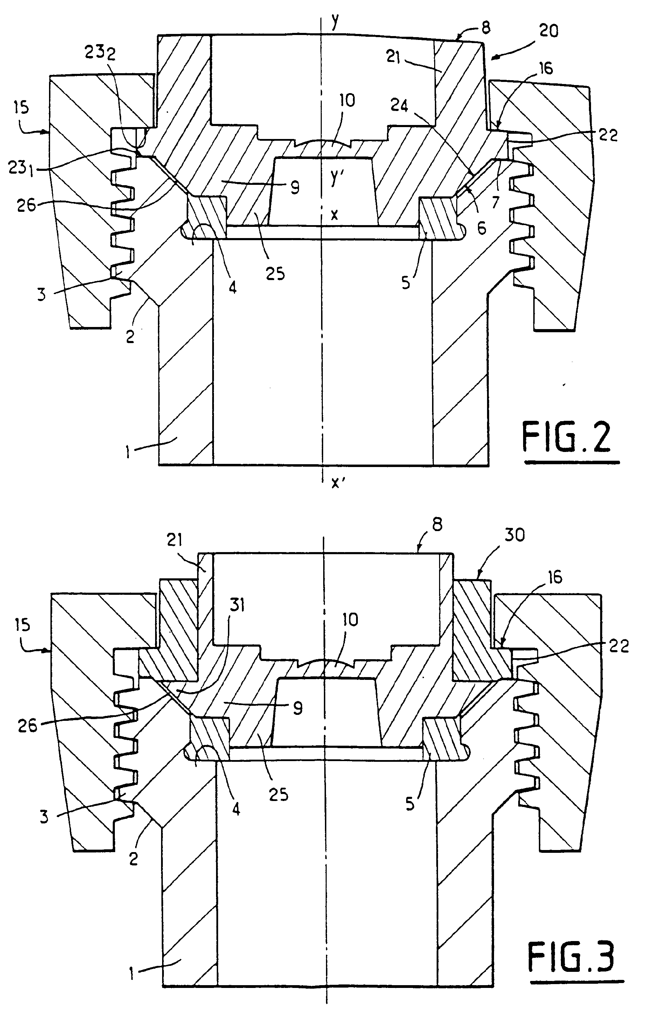

According to the first example of embodiment illustrated by figure 2, the object of the invention is to permit the mounting of a pressure transducer 20 on a pipeline 1 comprising a flange 2, provided, for example, with connecting means 3 designed to cooperate with a clamping member 15, constituted preferably by a screwable nut. As in the prior art, flange 2 internally delimits a bearing rim 4 for a seal 5. The rim 4 is connected to plane transverse edge 7 by a frustoconical surface, of the type of surface 6 of the prior art.

Rim 4, edge 7 and supporting face 16 of nut 15 define planes parallel to one another that are perpendicular to the axis x-x′ of pipeline 1.

The pressure transducer according to the invention can be considered as having a structure analogous to that of the prior art in that it comprises a body 8 defining a base 9 closed by an elastically deformable membrane 10 designed to support the strain gauge based sensor protected by a cylindrical envelope 21.

In the case of the invention, body 8 is designed to comprise, externally and concentrically to base 9 and envelope 21, a peripheral collar 22 defining two supporting faces, lower and upper respectively, 23₁ and 23₂. The planes of faces 23₁ and 23₂ are perpendicular to the axis of revolution y-y′ of body 8. Lower face 23₁ is extended by a frustoconical surface 24 which is joined to a circular centering portion 25 designed to fit inside seal 5. Surface 24 is made to have a clearance 26 in the order of a few tenths of a millimeter in relation to surface 6, when lower supporting face 23₁ cooperates with the transverse edge 7 of flange 2.

Collar 22 can be formed to extend substantially in the plane of membrane 10 or in proximity thereto.

The pressure transducer is mounted ensuring, first of all, that seal 5 is fitted against rim 4, and then engaging body 8 in such a way as to introduce centering portion 25 inside seal 5 to apply face 23₁ to edge 7 of flange 2.

Clamping member 15 is then put in place so that its fitting on means 3 causes face 16 to exert a pressure effect on face 23₂ in such a way as to force collar 22 against flange 2 parallel to the axes of symmetry y-y′, x-x′.

Efficient, even excessive, tightening of nut 15, by all suitable means, even if not orthodox, such as those frequently used on site, can result only in an application of compressive stress to collar 22 between supporting and clamping faces that are parallel to one another and perpendicular to axes y-y′, x-x′.

In this way, membrane 10 is protected from radial or pseudo-radial stress, is not subjected to any stress resulting from tightening and is thus in a neutral state on the basis of which calibration can be carried out in order to obtain a stable point of origin for measurements.

As member 10 is not subjected to any prestressing, it is also possible to carry out increasing pressure measurements and decreasing pressure measurements which, for the same scale values, produce little or no hysteresis factor.

In the example according to figure 2, transducer body 8 is mounted centered on flange 2, in particular in a pre-mounting position, via the centering portion 25 cooperating with seal 5. In this way, it is possible to achieve an assembly that accurately maintains clearance 26 between surfaces 6 and 24, in order to prevent punctual contact from giving rise, at the time of tightening, to the setting up of stresses applied to base 9 and transmitted by the latter to membrane 10.

Figure 3 shows another form of embodiment wherein collar 22 is formed, not directly by body 8, as in the preceding example, but via a ring 30 which is fitted on coaxially and is free to rotate on the outside of body 8 until coming into axial abutment with a shoulder 31 of the latter.

Such a form of embodiment permits angular orientation of body 8, even in a pre-tightening position, given that the axial, but also angular, immobilisation of collar 22 through the action of member 15 is transmitted only to ring 30.

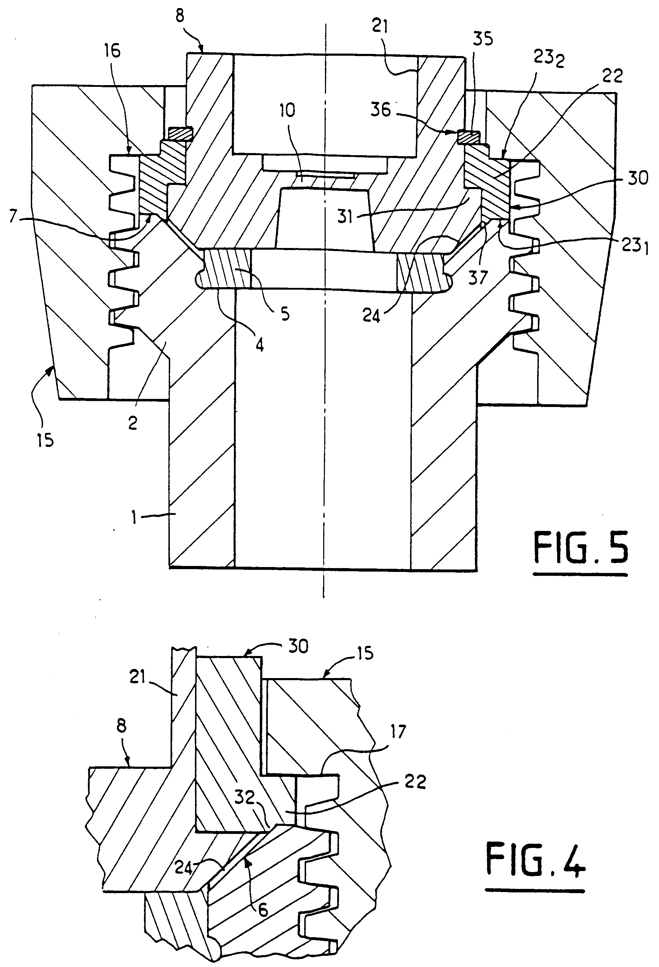

The coaxial fitting of body 8 onto pipeline 1 can be ensured, as already mentioned, via centering portion 25 extending base 9 to be introduced into seal 5. A variant of the means capable of ensuring such coaxial relationship is illustrated in figure 4, which shows that base 9, possibly without a centering portion 25, is placed coaxially in relation to pipeline 1 via a frustoconical bearing face 32 formed on the base, and back from the peripheral edge, of collar 22 of ring 30.

As can be seen in figure 4, mounting the pressure transducer on flange 2 ensures, through cooperation between bearing face 32 and surface 6, centering of ring 30, which ensures that of body 8 bearing by the transverse face of base 9 on seal 5.

This form of embodiment is characterized by the existence of a single tightening contact between the body of the transducer and the external parts, more particularly between the opposite faces of shoulder 31 and collar 22. Such an assembly removes the compressive stresses applied to the transducer body which can be reversibly deformed in the absence of friction, which eliminates any hysteresis factor.

Figure 5 illustrates the preferred form of embodiment, wherein ring 30 is axially immobilized on body 8 between shoulder 31 and a circlip type retaining ring or similar 35, removably mounted in a groove 36 in cylindrical envelope 21. In this example of embodiment, ring 30 always forms the collar 22 which is, preferably, of sufficient axial height to surround shoulder 31 directly joined to surface 24. The base of collar 22 comprises, in the area of junction between its inner peripheral face and transverse face 23₁, a lip 37 forming a frustoconical bearing face capable of cooperating with seat 6 to ensure the centering of body 8 in abutment with seal 5.

The invention is not limited to the examples described and represented, as various modifications can be made thereto without departing from the scope of the claims.

## Claims

1. Pressure transducer having a strain gauge for fitting on the end flange (2) of a pipeline or of a casing (1), of the type including a cylindrical body (8) forming, perpendicular to the rotational axis (y-y′) of the body (8), an elastically deformable membrane (10) bearing a sensor (11) having a strain gauge, connected to electric leads (12), and the cylindrical body having on one side of this membrane (10) an annular base (9) having a frustoconical surface (24) which is joined to a circular centering portion (25) for cooperation with a seal (5) and on the other side of this membrane a protective envelope (21) surrounding said sensor (11), **characterized in that** the cylindrical body (8) externally comprises an outwardly extending peripheral collar (22) defining two supporting faces (23.1 and 23.2) the planes of which are perpendicular to the rotational axis (y-y′) of the cylindrical body (8), one of the faces (23.1) being kept for contact with the upper section of the flange (2), while the other face (23.2) is designed to cooperate with an external clamping member (15) for clamping the cylindrical body (8) to the flange (2) by forcing the collar (22) downwardly against the said upper section of the flange (2), and in that the collar (22) is configured such that a clearance (26) between the frustoconical surface (24) of the cylindrical body (8) and the correspondingly frustoconical upper part (6) of the casing (1) or flange (2) avoids any contact other than by the collar (22).

2. Pressure transducer according to claim 1, **characterized in that** the collar (22) forms an integral part of the body (8).

3. Pressure transducer according to claim 1, characterized by the fact that the collar (22) is constituted by a ring (30) fitted on coaxially and free to rotate on the body (8), in abutment against a shoulder (31) of the base (9).

4. Pressure transducer according to claim 3, characterized in that the ring (20) is immobilized axially against the shoulder (31) by a retaining ring (35).

5. Pressure transducer according to claim 3 or 4, characterized in that the collar (22) forms a centering lip (32).

6. Pressure transducer according to claims 3 or 4, characterized in that the ring (30) comprises a centering ring (32, 37) suitable for cooperating with a frustoconical surface (6) on the casing (1) that is complementary to the frustoconical surface (24) of the body (8).

## Patentansprüche

1. Druckgeber mit einer Dehnungsmeßeinrichtung zum Anbringen an dem Endflansch (2) einer Rohrleitung oder einer Ummantelung (1) von dem Typ, welcher einen zylindrischen Körper (8) umfaßt, der orthogonal zu der Drehachse (y-y′) des Körpers (8) eine elastisch verformbare Membran (10) bildet, welche einen mit elektrischen Leitungen (12) verbundenen, eine Dehnungsmeßeinrichtung aufweisenden Sensor (11) trägt, wobei der zylindrische Körper an einer Seite der Membran (10) eine ringartige Basis (9) mit einer kegelstumpfförmigen Oberfläche (24) aufweist, welche mit einem kreisförmigen Zentrierungsabschnitt (25) zum Zusammenwirken mit einer Dichtung (5) und an der anderen Seite der Membran einer den Sensor (11) umgebenden Schutzumhüllung (21) verbunden ist, **dadurch gekennzeichnet, daß** der zylindrische Körper (8) außen einen sich nach außen erstreckenden Umfangsbund (22) umfaßt, welcher zwei Auflageflächen (23₁ und 23₂) festlegt, deren Ebenen orthogonal zu der Drehachse (y-y′) des zylindrischen Körpers (8) sind, wobei eine der Flächen (23₁) für den Kontakt mit dem oberen Abschnitt des Flansches (2) vorgesehen ist, während die andere Fläche (23₂) dazu ausgebildet ist, mit einem äußeren Festklemmelement (15) zum Festklemmen des zylindrischen Körpers (8) an dem Flansch (2) durch Drängen des Bunds (22) nach unten gegen den oberen Abschnitt des Flansches (2) zusammenzuwirken, und daß der Bund (22) derart gebildet ist, daß ein Zwischenraum (26) zwischen der kegelstumpfförmigen Oberfläche (24) des zylindrischen Körpers (8) und dem dementsprechend kegelstumpfförmigen oberen Teil (6) der Ummantelung (1) oder des Flansches (2) jeden Kontakt außer durch den Bund (22) vermeidet.

2. Druckgeber nach Anspruch 1, dadurch gekennzeichnet, daß der Bund (22) einen einheitlichen Teil des Körpers (8) bildet.

3. Druckgeber nach Anspruch 1, gekennzeichnet durch die Tatsache, daß der Bund (22) von einem Ring (30) gebildet ist, welcher koaxial und frei drehbar auf den Körper (8) in Anlage an einer Schulter (31) der Basis (9) gepaßt ist.

4. Druckgeber nach Anspruch 3, dadurch gekennzeichnet, daß der Ring (20) durch einen Haltering (35) an der Schulter (31) axial festgelegt ist.

5. Druckgeber nach Anspruch 3 oder 4, dadurch gekennzeichnet, daß der Bund (22) eine Zentrierungslippe (32) bildet.

6. Druckgeber nach Anspruch 3 oder 4, dadurch gekennzeichnet, daß der Ring (30) einen Zentrierungsring (32,37) umfaßt, welcher zum Zusammenwirken mit einer zu der kegelstumpfförmigen Fläche (24) des Körpers (8) komplementären, kegelstumpfförmigen Oberfläche (6) an der Ummantelung (1) geeignet ist.

## Revendications

1. Capteur de pression comportant une jauge de contrainte pour s'adapter sur le collet extrême (2) d'une canalisation ou d'un tubage (1), de type comprenant un corps cylindrique (8) formant, perpendiculairement à l'axe de rotation (y - y′) du corps (8), une membrane élastique déformable (10) supportant une sonde (11) comportant une jauge de contrainte, connectée à des fils électriques (12), et le corps cylindrique comportant sur un côté de cette membrane (10) une embase annulaire (9) ayant une surface tronconique (24) qui se raccorde à une partie circulaire de centrage (25) en coopération avec un joint (5) et sur l'autre côté de cette membrane une enveloppe de protection (21) entourant ladite sonde (11), caractérisé en ce que le corps cylindrique (8) comprend une collerette périphérique s'étendant vers l'extérieur (22) définissant deux faces de support (23.1 et 23.2) dont les plans sont perpendiculaires à l'axe de rotation (y - y′) du corps cylindrique (8) , l'une des faces (23.1) étant destinée à être en contact avec la partie supérieure du collet (2), tandis que l'autre face (23.2) est conçue pour coopérer avec un élément de serrage extérieur (15) pour fixer le corps cylindrique (8) sur le collet (2) en poussant la collerette (22) vers le bas contre ladite partie supérieure du collet (2), et en ce que la collerette (22) est formé de telle manière qu'un espace (26) entre la surface tronconique (24) du corps cylindrique (8) et la partie supérieure tronconique correspondante (6) du tubage (1) ou du collet (2) empêche tout contact autre que par la collerette (22).

2. Capteur de pression selon la revendication 1, caractérisé en ce que la collerette (22) fait partie intégrante du corps (8).

3. Capteur de pression selon la revendication 1, caractérisé par le fait que la collerette (22) est constitué d'une bague ajustée coaxialement et libre de rotation sur le corps (8), en butée cotre un épaulement (31) de l'embase (9).

4. Capteur de pression selon la revendication 3, caractérisé en ce que la bague (20) est immobilisée axialement contre l'épaulement (31) par une bague de retenue (35).

5. Capteur de pression selon la revendication 3 ou 4, caractérisé en ce que la collerette (22) forme une lèvre de centrage (32).

6. Capteur de pression selon les revendications 3 ou 4, caractérisé en ce que la bague (30) comprend une bague de centrage (32, 37) apte à coopérer avec une surface tronconique (6) sur le tubage (1) complémentaire à la surface tronconique (24) du corps (8).
